# EUROPÄISCHE PATENTANMELDUNG

(11) **EP 2 050 976 A1**
(43) Veröffentlichungstag der Anmeldung: **22.04.2009**
(21) Anmeldenummer: 08016824.8
(22) Anmeldetag: 25.09.2008
(51) Int. Cl.: F16D 13/71

(54) **Reibungskupplung**

(30) Priorität: 15.10.2007 DE 102007049255
(71) Anmelder: LuK Lamellen und Kupplungsbau Beteiligungs KG, 77815 Bühl (DE)
(72) Erfinder: Juhasz, Levente, 77815 Bühl (DE); Kremer, Eugen, 77815 Bühl (DE); Kappelmann, Ralf, 77871 Renchen (DE); Senghas, Marc, 77815 Bühl (DE)

(57) **Zusammenfassung**

Es wird eine Reibungskupplung, bei der eine Kupplungsscheibe zwischen einer Druckplatte und einer axial zu dieser zum Öffnen und Schließen der Reibungskupplung verlagerbaren Anpressplatte verspannt ist, vorgeschlagen, deren Anpressplatte ein axial gegenüber dieser begrenzt verlagerbares Masseteil aufweist.

## Beschreibung

Die Erfindung betrifft eine Reibungskupplung mit einer Druckplatte und einer hierzu axial begrenzt verlagerbaren Anpressplatte und einer zwischen diesen verspannbaren Kupplungsscheibe.

Reibungskupplungen dieser Art sind im Fahrzeugbau verbreitet und werden bevorzugt als pedalbetätigte oder automatisierte Trockenkupplungen zwischen einer Brennkraftmaschine und einem handgeschalteten oder automatisierten Getriebe eingesetzt.

Durch das Funktionsprinzip der Brennkraftmaschine bedingt treten an der Kurbelwelle der Brennkraftmaschine und damit auch an der mit der Kurbelwelle verbundenen Reibungskupplung häufig Axial- und/oder Taumelschwingungen auf, die den Kupplungsprozess störend beeinflussen können. Insbesondere kann die Anpressplatte bei offener Reibungskupplung - dies bedeutet bei axial von der Druckplatte entgegen der Wirkung von Energiespeichern wie beispielsweise Blattfedern beabstandeter Anpressplatte und freigestellter Kupplungsscheibe - die Anpressplatte zu Axialschwingungen angeregt werden, wodurch unerwünschte Schwingungseffekte entstehen wie beispielsweise eine Kontaktierung der Kupplungsscheibe, Geräusche und bei selbstnachstellenden Reibungskupplungen unter Umständen ein ungewolltes Nachstellen.

Aufgabe der Erfindung ist daher, Reibungskupplungen derart weiterzubilden, dass die Anpressplatte bezüglich ihres Axialschwingungsverhaltens verbessert wird.

Die Aufgabe wird durch eine Reibungskupplung mit einer Druckplatte und einer axial gegenüber der Druckplatte verlagerbaren, drehfest mit der Druckplatte drehenden Anpressplatte gelöst, wobei an der Anpressplatte ein gegenüber dieser axial begrenzt verlagerbares Masseteil angebracht ist. Diese Lösung eignet sich prinzipiell für alle Reibungskupplungen, die nach dem Prinzip einer zwischen Druckplatte und einer hierzu verlagerbaren Anpressplatte verspannbaren Kupplungsscheibe ausgebildet sind. Beispielsweise können die Reibungskupplungen zugedrückt, zugezogen, aufgedrückt oder aufgezogen sein. Bei Doppelkupplungen können eine oder beide Teilkupplungen die vorgeschlagene Lösung aufweisen.

Neben oder alternativ zur von der Brennkraftmaschine eingetragenen Drehungleichförmigkeiten können andere axiale Schwingungsanregungen möglich sein, so dass auch eine Anordnung der vorgeschlagenen Reibungskupplung in anderen Anwendungen vorteilhaft sein kann. Die Reibungskupplung wird in vorteilhafter Weise mit der Druckplatte oder einem mit diesem verbundenen Bauteil, beispielsweise unter Zwischenschaltung eines Zweimassenschwungrads, mit der Kurbelwelle der Brennkraftmaschine verbunden.

Das vorgeschlagene Masseteil ist vorzugsweise aus Metall, beispielsweise als Press-, Stanz-oder Schmiedeteil aus Stahl hergestellt. Das Masseteil kann aus mehreren, über den Umfang verteilten Einzelteilen, die jeweils für sich an der Anpressplatte aufgenommen sein können, gebildet oder ringförmig ausgestaltetet sein und an der Anpressplatte axial verlagerbar in einer ringförmigen Ausnehmung der Anpressplatte angeordnet sein. Als besonders vorteilhaft hat sich eine Anordnung radial innerhalb der Anpressplatte gezeigt. Hier kann das Masseteil vorzugsweise radial zwischen den Reibbelägen der Kupplungsscheibe und einer gegebenenfalls vorhandenen Dämpfungseinrichtung der Kupplungsscheibe Platz sparend untergebracht werden.

Im ausgerückten Zustand schwingt die Anpressplatte gegen Blattfeder, Tellerfeder und Kupplungsgehäuse, so dass die Charakteristik beziehungsweise die Lage dieser Bauteile zueinander in Verbindung mit der Masse der Anpressplatte deren Eigenfrequenz ergibt, die vergleichsweise konstant ist. Zur optimalen Tilgung dieser Eigenfrequenz wird die Masse des Massenteils entsprechend ausgelegt. Auf Basis dieser Eigenfrequenz kann das schwingungsdämpfende Verhalten zwischen Anpressplatte und Masseteil abgeglichen werden. Durch das axial begrenzt gegenüber der Anpressplatte verlagerbare Masseteil schlägt dieses während der Schwingungen der Anpressplatte an der Anpressplatte an und verbessert allein dadurch bereits das Schwingungsverhalten der Anpressplatte.

Weiterhin kann das Masseteil gegenüber der Anpressplatte insbesondere eine tilgerähnliche Wirkung entfalten, wenn das oder die Masseteile entgegen der Wirkung eines Energiespeichers axial verlagerbar gegen das Anpressteil angeordnet sind. Der Energiespeicher kann daher aus einer oder mehreren Blattfedern, Schrauben- und/oder Tellerfedern gebildet sein. Es hat sich gezeigt, dass der Tilger bei typischen Anwendungen auf einen Eigenfrequenzbereich von 200-300 Hz abgestimmt werden kann. Es versteht sich, dass zwischen der Anpressplatte und dem Masseteil zusätzlich eine Reibeinrichtung vorgesehen sein kann.

Die Befestigung des ringförmig und radial innerhalb der Anpressplatte zu befestigenden Masseteils an der Anpressplatte erfolgt in vorteilhafter Weise mittels mehrerer am Masseteil über den Umfang verteilter, nach radial außen gerichteter und in die Anpressplatte mit Axialspiel eingreifender Profile. So können aus dem Masseteil beispielsweise radial auskragende Arme gebildet sein, die in entsprechende Ausnehmungen der Anpressplatte eingehakt werden. Weiterhin können derartige oder separat an dem Masseteil angebrachte Laschen mit der Anpressplatte befestigt, beispielsweise vernietet sein. Besonders vorteilhaft können an dem Massering angebrachte Stifte in an der Anpressplatte vorgesehene Öffnungen größeren Durchmessers eingehängt werden, so dass eine axiale Verlagerung des Masseteils gegenüber der Anpressplatte durch den Durchmesserunterschied bereitgestellt wird.

Eine weitere vorteilhafte Anwendung kann eine in axiale Richtung begrenzt gleitende oder rollende Aufnahme des Masseteils auf der Anpressplatte sein, wobei die gleitende oder rollende Bewegung entgegen der Wirkung eines Energiespeichers und/oder einer Reibeinrichtung erfolgen kann. Zusätzlich oder alternativ kann vorgesehen sein, die Verlagerung der Anpressplatte entgegen der Wirkung der Blattfedern reibungsbehaftet zu gestalten, damit über die Blattfedern eingetragene Schwingungen bereits dort gedämpft werden.

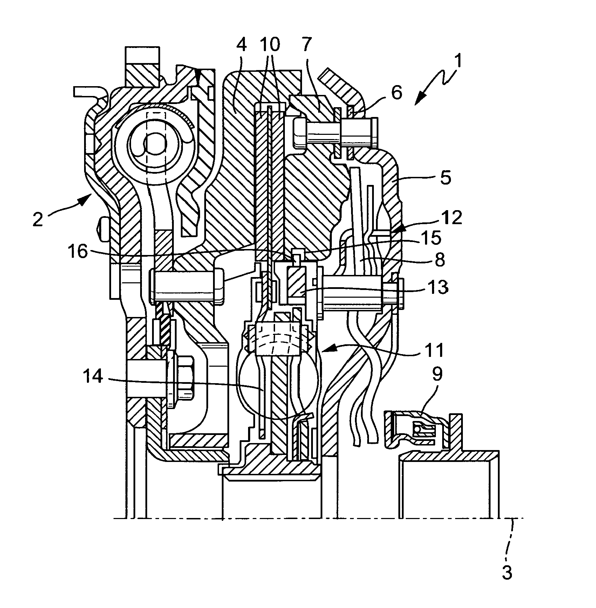

Die Erfindung wird anhand der einzigen Figur näher erläutert. Diese zeigt einen auf die obere Hälfte beschränkten Teilschnitt eines Ausführungsbeispiels einer um eine Drehachse 3 verdrehbaren Reibungskupplung 1, die auf einem Zweimassenschwungrad 2 aufgebracht ist, wobei das Sekundärteil des Zweimassenschwungrads 2 die Druckplatte 4 der Reibungskupplung 1 enthält und das Primärteil an die Kurbelwelle einer Brennkraftmaschine montiert ist. Die Reibungskupplung 1 weist ein Kupplungsgehäuse 5 auf, das drehfest mit der Druckplatte 4 verbunden ist und über die endseitig mit dem Kupplungsgehäuse 5 und der Anpressplatte 7 verbundenen Blattfedern 6 die Anpressplatte 7 drehfest und axial verlagerbar mit dem Kupplungsgehäuse 5 verbinden. Das Kupplungsgehäuse 5 nimmt weiterhin die Tellerfeder 8 als zweiarmigen Hebel auf, der radial außen die Anpressplatte 7 beaufschlagt und somit die Anpressplatte gegenüber der Druckplatte 4 verspannt. Axial zwischen Druckplatte 4 und Anpressplatte 7 werden dabei die Reibbeläge 10 der getriebeseitig angebundenen Kupplungsscheibe verspannt und zwischen der Brennkraftmaschine und dem Getriebe ein Reibschluss hergestellt. Dieser wird beim Öffnen der Reibungskupplung 1 durch eine Axialverlagerung des die Tellerfeder 8 radial innen beaufschlagenden Ausrücklagers 9 aufgehoben, indem die Anpressplatte 7 von der Druckplatte 4 beabstandet werden.

Im geöffneten Zustand der Reibungskupplung 1 ist die Anpressplatte 7 über die Blattfedern 6 elastisch an das Kupplungsgehäuse 5 angebunden. Treten Axialschwingungen, beispielsweise von der Brennkraftmaschine initiiert, am Kupplungsgehäuse 5 auf, können abhängig von der Anregungsfrequenz, der Federsteifigkeit der Blattfedern 6 und der Masse der Anpressplatte 7 Eigenschwingungen der Anpressplatte 7 auftreten, die sich negativ auf den Kupplungsvorgang und/oder die Nachstelleinrichtung 12 auswirken können. Zur Kompensation der Axialschwingungen wird daher die Masse der Anpressplatte geteilt und ein Teil der Masse in Form des Masseteils 13 gegenüber der Anpressplatte 7 axial begrenzt verlagerbar angeordnet. Das Masseteil 13 ist in dem gezeigten Ausführungsbeispiel ringförmig ausgestaltet und radial innerhalb der Anpressplatte 7 angeordnet. Die geometrische Anordnung erfolgt in der Weise, dass ein Bauraum radial zwischen den Reibbelägen 10 und einer axial erhabenen Kontur des Torsionsschwingungsdämpfers 14 genutzt werden kann. Zur Aufnahme des Masseteils 13 in der Anpressplatte 7 weist diese über den Umfang verteilte Öffnungen 15 auf, in die im Masseteil 13 befestigte Stifte 16 mit kleinerem Durchmesser eingreifen, wodurch eine axial begrenzt verlagerbare Verbindung zwischen Masseteil 13 und Anpressplatte 7 entsteht. Es kann vorgesehen sein, die axiale Verlagerung durch Feder- und/oder Reibmittel zwischen Anpressplatte 7 und Masseteil 13 zu dämpfen. Das Masseteil 13 ist bezüglich seiner Masse bei im Wesentlichen konstanter Eigenfrequenz der Anpressplatte 7 auf eine Tilgung oder Dämpfung der Schwingungen angepasst, wobei ohne Verwendung von zusätzlichen Federelementen allein durch die axial begrenzte Anordnung des Masseteils 13 an der Anpressplatte 7 bewirkten Stöße des Masseteils 13 gegen die Anpressplatte 7 in ausreichendem Maße vermindert werden kann. Eine zusätzliche tilgende Wirkung kann durch Zwischenschaltung eines axial wirksamen Federelements, beispielsweise zumindest einer Blattfeder, die zur Verminderung ihrer Steifigkeit sich über einen Teilumfang zwischen Masseteil 13 und Anpressplatte 7 erstrecken kann, erzielt werden. Zusätzlich können zwischen Anpressplatte 7 und Messeteil 13 beispielsweise parallel und/oder seriell Reibelemente vorgesehen sein, die eine weitere Dämpfung der Schwingungen der Anpressplatte bewirken können.

### Bezugszeichenliste

- 1: Reibungskupplung
- 2: Zweimassenschwungrad
- 3: Drehachse
- 4: Druckplatte
- 5: Kupplungsgehäuse
- 6: Blattfeder
- 7: Anpressplatte
- 8: Tellerfeder
- 9: Ausrücklager
- 10: Reibbelag
- 11: Kupplungsscheibe
- 12: Nachstelleinrichtung
- 13: Masseteil
- 14: Torsionsschwingungsdämpfer
- 15: Öffnung
- 16: Stift

## Patentansprüche

1. Reibungskupplung (1) mit einer Druckplatte (4) und einer axial gegenüber der Druckplatte (4) verlagerbaren, drehfest mit der Druckplatte (4) drehenden Anpressplatte (7), **dadurch gekennzeichnet, dass** an der Anpressplatte (7) ein gegenüber dieser axial begrenzt verlagerbares Masseteil (13) angebracht ist.

2. Reibungskupplung (1) nach Anspruch 1, **dadurch gekennzeichnet, dass** das Masseteil (13) ringförmig radial innerhalb der Anpressplatte (7) angebracht ist.

3. Reibungskupplung (1) nach Anspruch 1 oder 2, **dadurch gekennzeichnet, dass** das Masseteil (13) entgegen der Wirkung eines Energiespeichers axial verlagerbar angeordnet ist.

4. Reibungskupplung (1) nach einem der Ansprüche 1 bis 3, **dadurch gekennzeichnet, dass** am Masseteil (13) mehrere über den Umfang verteilte, nach radial außen gerichtete und in die Anpressplatte (7) mit Axialspiel eingreifende Profile vorgesehen sind.

5. Reibungskupplung (1) nach Anspruch 4, **dadurch gekennzeichnet, dass** die Profile aus im Masseteil (13) angebrachte Stifte (16) sind.

6. Reibungskupplung (1) nach einem der Ansprüche 1 bis 3, **dadurch gekennzeichnet, dass** das Masseteil auf der Anpressplatte axial gleitet oder abrollt.

7. Reibungskupplung (1) nach einem der Ansprüche 1 bis 6, **dadurch gekennzeichnet, dass** zwischen Anpressteil (7) und Masseteil (13) eine Reibeinrichtung vorgesehen ist.
